# EUROPÄISCHE PATENTANMELDUNG

(11) **EP 0 808 038 A2**
(43) Veröffentlichungstag der Anmeldung: **19.11.1997**
(21) Anmeldenummer: 97107310.1
(22) Anmeldetag: 02.05.1997
(51) Int. Cl.: H04B 10/00

(54) **Anzeigevorrichtung mit helligkeitsangepasster Anzeigebeleuchtung**

(30) Priorität: 17.05.1996 DE 19619926
(71) Anmelder: SIEMENS AKTIENGESELLSCHAFT, 80333 München (DE)
(72) Erfinder: Bomber, Martin, Dipl.-Ing. (FH), 93059 Regensburg (DE); Menten, Frank, Dipl.-Ing. (FH), 93053 Regensburg (DE); Puchta, Ralf, Dipl.-Ing., 93053 Regensburg (DE)

(57) **Zusammenfassung**

Zur bauteilemindernden und damit kostengünstigen Fertigung von Anzeigevorrichtungen mit an das Umgebungslicht angepaßter Anzeigehelligkeit ist bei einer anzeigenden Vorrichtung mit einer an sich vorhandenen optischen Schnittstelle zum drahtlosem Datenaustausch zwischen je einem ersten Sender-Empfänger-Pärchen (S1;E1) und einem zweiten Sender-Empfänger-Pärchen (S2;E2) vorgesehen, den Schnittstellen-Empfänger (E2) der anzeigenden Vorrichtung als Meß-Empfänger für die Helligkeit des Umgebungslichtes mitzubenutzen.

## Beschreibung

Die Erfindung bezieht sich auf eine Anzeigevorrichtung mit an das jeweilige Umgebungslicht helligkeitsangepaßter Anzeigebeleuchtung gemaß Patentanspruch 1; derartige Anzeigevorrichtungen, z.B. in Form von selbstleuchtenden LED-Anzeigen bzw. hintergrundbeleuchteten LCD-Anzeigen, werden bei Geraten benutzt, deren Einstellungen bzw. Betriebszustande bei Tag und Nacht ablesbar sein sollen, jedoch bei Nacht, d.h. bei geringem Umgebungslicht, den Raum nicht in unerwünschter Weise beleuchten bzw. zu viel Energie verbrauchen sollen. Zur gewünschten Helligkeitsanpassung ist es notwendig, die jeweilige Helligkeit des Umgebungslichtes durch einen optischen Sensor zu erfassen.

Geräte mit Anzeigevorrichtungen der vorgenannten Art, z.B. Herde mit optoelektronischen Kochstellensteuerungen und entsprechenden beleuchteten Betriebsarten-Anzeigen, weisen oftmals sogenannte optische Schnittstellen auf, mittels derer ohne Notwendigkeit einer Steckkontaktierung mit daran angeschlossenen Leitungen ein Datenaustausch zwischen einer am Gerät vorhandenen Elektronik-Vorrichtung einerseits und einer mit dieser von außen kommunizierenden Elektronik-Vorrichtung, z.B. in Form einer Diagnose- bzw. Programmier-Vorrichtung, möglich ist. Derartige optische Schnittstellen benötigen bei bidirektionaler Übertragung sowohl für die eine wie auch für die andere Elektronik-Vorrichtung jeweils ein optisches Sender-Empfänger-Pärchen und bei undirektionaler Übertragung zumindest einen Empfänger in der geräteseitigen Elektronik und einen Sender in der Diagnose- bzw. Programmiervorrichtung mittels derer die Datenübertragung in zumindest der einen bzw. auch in der anderen Richtung erfolgen kann.

Es ist Aufgabe vorliegender Erfindung, bei Vorrichtungen mit integrierter optischer Schnittstelle den Bauteile- und damit Kostenaufwand für eine an das jeweilige Umgebungslicht helligkeitsanpaßbare Anzeigebeleuchtung zu mindern. Die Lösung dieser Aufgabe gelingt mit einer Anzeigevorrichtung gemäß Patentanspruch 1; vorteilhafte Ausgestaltungen der Erfindung sind jeweils Gegenstand der Unteransprüche.

Optische Schnittstellen mit einem Datenaustausch zwischen einem externen Programmiergerät und einer zu programmierenden Einheit sind z.B. durch die DE-A1-39 21 344 bekannt. Durch die europäische Patentanmeldung mit dem amtlichen Aktenzeichen 196 03 295.4 ist bereits eine optoelektronische Kochstellensteuerung mit einer optischen Schnittstelle beschrieben worden, über die eine Programmier- und/oder eine Diagnoseeinheit mit einer Kochstellensteuerung ohne Notwendigkeit einer elektrischen Leitungs- bzw. Steckereinrichtung Daten austauschen kann.

Durch die erfindungsgemäße Mitbenutzung eines aufgrund einer vorhandenen optischen Schnittstelle bereits in dem mit der Anzeigevorrichtung ausgestatteten Gerät installierten optischen Empfängers kann auf einfache Weise eine helligkeitsangepaßte Anzeigebeleuchtung ohne zusätzlichen eigenen Meßfühler für das jeweilige Umgebungslicht erreicht werden; wenn für den drahtlosen Datenaustausch der optischen Schnittstelle Wechselsignale, insbesondere in Form von codierten Pulsen, verwendet werden, kann der üblicherweise als Gleichsignal vorliegende Meßwert für die jeweilige Helligkeit des Umgebungslichtes gleichzeitig über den mitbenutzten optischen Empfängers der Schnittstelle übertragen und anschließend durch einfache Trennung, z.B. mittels eines dem Gleichlicht zugeordneten Tiefpasses bzw. eines dem Wechselsignal zugeordneten Hochpasses, getrennt und gezielt weiterverarbeitet werden.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung naher erläutert; darin zeigen:
- FIG 1: eine optische Schnittstelle mit auf eine Ceran-Abdeckscheibe einer Kochstellensteuerung aufgesetzter externer Programmier- und/oder Diagnoseeinheit;
- FIG 2: das Blockschaltbild zu einer erfindungsgemäßen helligkeitsangepaßten Anzeigebeleuchtung unter Verwendung eines optischen Empfängers der optischen Schnittstelle gemäß FIG 1.

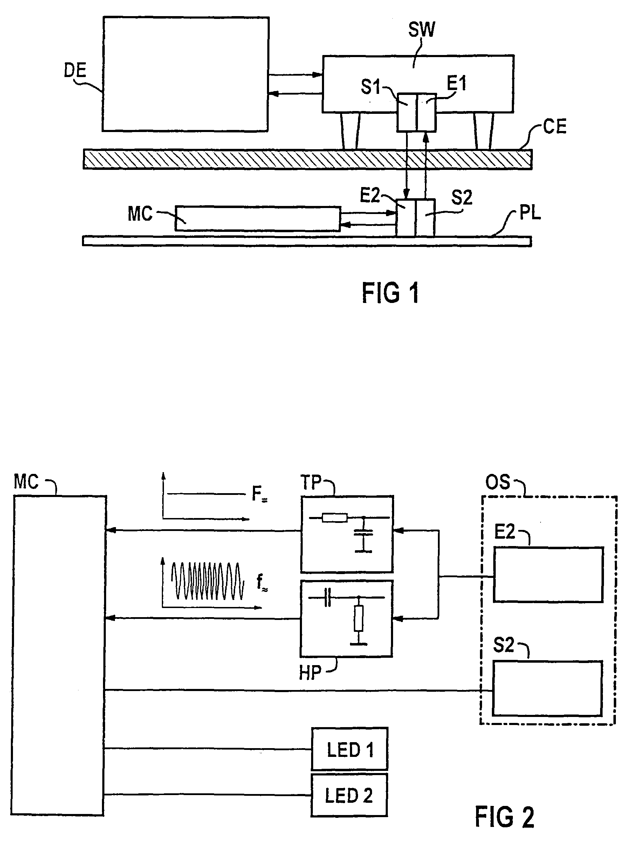

FIG 1 zeigt in der baulichen Anwendungsfiguration und FIG 2 ausschnittsweise im zugehörigen Blockschaltbild eine optische Schnittstelle zwischen einer externen Programmier- und/oder Diagnoseeinheit DE oberhalb einer als Schutzabdeckung vorgesehenen strahlungsdurchlässigen Ceran-Scheibe CE und einer Steuereinheit MC in Form eines Mikro-Controllers unterhalb der Ceran-Scheibe CE als Bestandteil einer auf einer Platine PL angeordneten und verschalteten optoelektronischen Kochstellensteuerung. Zur optischen Übertragung dienen auf der Oberseite der Ceran-Scheibe CE ein erster Sender S1 sowie ein erster Empfänger E1 sowie unterhalb der Ceran-Scheibe CE ein dem ersten Sender S1 zugeordneter zweiter Empfänger E2 und ein dem ersten Empfänger E1 zugeordneter zweiter Sender S2. Der zweite Sender S2 und der zweite Empfänger E2 sind an einen seriellen Schnittstellenausgang des Mikro-Controllers angeschlossen, über den ein derartiger Controller einschließlich der notwendigen Prüfsoftware in der Regel verfügt.

Die Signale des gegenseitigen Datenaustausches bestehen in der Regel aus spezifisch pulsweitenmodulierten Pulsfolgen, die über den ersten Sender S1 störungsfrei an den zweiten Empfänger E2 mittels Infrarotstrahlung durch die Ceran-Scheibe CE übertragen werden und zu einer bestimmten Befehlskonstellation im Mikro-Controller MC der Steuereinheit fuhren; entsprechende Rückmeldungen erfolgen über den zweiten Sender S2 durch Infrarotstrahlung durch die Ceran-Scheibe CE an den ersten Empfänger E1 und somit an die Programmier- und/oder Diagnoseeinheit.

Zur normierten Anpassung ist auf der externen Seite zwischen dem ersten Sender S1 und dem ersten Empfänger E1 einerseits sowie der externen Programmier- und/oder Diagnoseeinheit DE andererseits ein Schnittstellenwandler SW vorgesehen, der die von der Programmier- und oder Diagnoseeinheit DE aus- bzw. eingehenden Signale auf sogenannten TTL-Pegel konvertiert.

Entsprechend unterschiedlichen Einstellungen werden in einer Bedienfront über Leuchtanzeigen, insbesondere über direkt leuchtende LED-Anzeigen, beleuchtete Einstellanzeigen einer Kochstellensteuerung oder durch hintergrundbeleuchtete LCD-Anzeigen Betriebsartenanzeigen einer Backofensteuerung aktiviert; diese Anzeigen sollen in ihrer Helligkeit dem jeweiligen Umgebungslicht anpaßbar sein.

Zur dazu notwendigen Erfassung der jeweiligen Helligkeit des Umgebungslichtes ist ein optischer Meßsensor vorzusehen; erfindungsgemäß wird dazu der, voraussetzungsgemäß im Bereich des sichtbaren Lichtes arbeitende, zweite Empfänger E2 des optischen Sender-Empfänger-Pärchens der hier angenommenen Kochstellensteuerung mitbenutzt, die als Teil der optischen Schnittstelle mit der Sender-Empfänger-Pärchen S2;E2 bzw. S1;E1 installiert ist.

In vorteilhafter Weise ist ein Parallelbetrieb des zweiten mitbenutzten Empfängers E2 sowohl für den Datenaustausch der an sich vorhandenen optischen Schnittstelle als auch zur Meßwerterfassung des Umgebungslichtes vorgesehen, wobei für den Datenaustausch ein Wechselsignal f_{≈} und für die Lichtmessung ein Gleichsignal F₌ vorgesehen und beide Signale zur weiteren individuellen Verarbeitung, z.B. in der elektronischen Steuervorrichtung in Form des Mikrocontrollers MC, getrennt werden; in einfacher Weise erfolgt diese Signaltrennung durch einen Hochpaß HP für das Wechselsignal der optischen Schnittstelle bzw. durch einen Tiefpaß TP für das Gleichsignal F₌ des Umgebungslichtes. Die Realisierung eines derartigen Hochpasses bzw. Tiefpasses kann auch rein softwaremäßig erfolgen.

Obwohl die Erfindung anhand einer Schnittstelle mit bidirektionaler Datenübertragung beschrieben wurde, ist selbstverständlich auch eine Schnittstelle mit undirektionaler Schnittstelle von der Erfindung mitumfaßt, wenn der dann nur auf der Kochstellen-Schnittstellenseite vorgesehene Empfänger als Sender für die Helligkeit des Umgebungslichtes mitbenutzt wird.

## Patentansprüche

1. Anzeigevorrichtung mit an das jeweilige Umgebungslicht helligkeitsangepaßter Anzeigebeleuchtung unter Verwendung eines die jeweilige Helligkeit des Umgebungslichtes empfangenden optischen Empfängers (E2), wobei der optische Empfänger (E2) mitbenutzter Teil einer an sich vorhandenen optischen Schnittstelle (S1,E1;S2,E2) zum drahtlosen Datenaustausch zwischen zwei Elektronik-Vorrichtungen (DE;MC) mit einem optischen Empfänger (E1;E2) und einem optischen Sender (S1;S2) ist.

2. Anzeigevorrichtung nach dem vorhergehenden Anspruch mit einem die Helligkeit des Umgebungslichtes repräsentierenden Gleichsignal (F₌) bzw. einem zum drahtlosen Datenaustausch der optischen Schnittstelle vorgesehenen Wechselsignal (f_{≈}).

3. Anzeigevorrichtung nach zumindest einem der vorhergehenden Ansprüche mit einem drahtlosen Datenaustausch zwischen einem ersten optischen Sender (S1) und einem ersten optischen Empfänger (E1), insbesondere als Teile einer Programmier- und/oder Diagnoseeinheit (DE), sowie einem zweiten optischen Sender (S2) und einem zweiten Empfänger (E2), insbesondere als Teile einer optoelektronischen Kochstellen-Steuerung (MC).

4. Anzeigevorrichtung nach dem vorhergehenden Anspruch, wobei der zweite Empfänger (E2) als optischer Empfänger zur Messung der jeweiligen Helligkeit des Umgebungslichtes mitbenutzt ist.

5. Anzeigevorrichtung nach zumindest einem der vorhergehenden Ansprüche mit einem sukzessiven Einsatz des mitbenutzten Empfängers (E2) zum Datenaustausch der optischen Schnittstelle bzw. zur Erfassung der Helligkeit des Umgebungslichtes.

6. Anzeigevorrichtung nach zumindest einem der vorhergehenden Ansprüche 1-4 mit einem parallelen Einsatz des mitbenutzten Empfängers (E2) zum Datenaustausch der optischen Schnittstelle bzw. zur Erfassung der Helligkeit des Umgebungslichtes.

7. Anzeigevorrichtung nach zumindest einem der vorhergehenden Ansprüche mit einer direkt leuchtenden LED-Anzeige (LED1-LED3) bzw. mit einer hintergrundbeleuchteten LCD-Anzeige.
